# EUROPÄISCHE PATENTSCHRIFT

(11) **EP 4 624 770 B1**
(45) Veröffentlichungstag und Bekanntmachung des Hinweises auf die Patenterteilung: **09.12.2026**
(21) Anmeldenummer: 24166943.1
(22) Anmeldetag: 27.03.2024
(51) Int. Cl.: F16B 19/08

(54) **HALBHOHLSTANZNIET, HERSTELLUNGSVERFAHREN UND VERBINDUNG DAMIT**
SEMI-TUBULAR PUNCH RIVET, MANUFACTURING METHOD AND CONNECTION WITH SAME
RIVET DE POINÇONNAGE SEMI-TUBULAIRE, PROCÉDÉ DE FABRICATION ET JOINT L'UTILISANT

(43) Veröffentlichungstag der Anmeldung: 01.10.2025
(73) Patentinhaber: Böllhoff Verbindungstechnik GmbH, 33649 Bielefeld (DE)
(72) Erfinder: FRÖMMER, Sven, 33659 Bielefeld (DE); FLÜGGE, Tim, 32105 Bad Salzuflen (DE)
(74) Vertreter: HWP Intellectual Property

(56) Entgegenhaltungen:
- DE-A1- 102021 133 544
- US-A1- 2017 009 794
- US-A1- 2021 207 638
- US-B2- 10 751 787

## Beschreibung

### 1. Gebiet der Erfindung

Die vorliegende Erfindung betrifft einen Halbhohlstanzniet, mit dem eine Verbindung zwischen mindestens zwei stapelförmig übereinander angeordneten und nicht vorgelochten Bauteilen herstellbar ist. Des Weiteren betrifft vorliegende Erfindung eine Verbindung aus mindestens zwei stapelförmig übereinander angeordneten Metallbauteilen, die mithilfe des Halbhohlstanzniets miteinander verbunden sind. Zudem betrifft vorliegende Erfindung ein Herstellungsverfahren des oben genannten Halbhohlstanzniets mittels Kaltschlagen.

### 2. Hintergrund der Erfindung

Im Stand der Technik gibt es eine Vielzahl von unterschiedlichen Nietgeometrien, deren einzelne konstruktive Merkmale auf die Realisierung bestimmter technischer Funktionen oder Ziele in einer Stanznietverbindung ausgerichtet sind.

EP 2 080 915 A2 offenbart einen relativ kurzen Halbhohlstanzniet von 6,5 mm Länge. Dieser Halbhohlstanzniet dient der Verbindung eines hochfesten Deckblechs aus Stahl mit einem darunter angeordneten Aluminiumblech.

Auf die gleiche Verbindung aus hochfester Decklage aus Stahl und einer dickwandigen Aluminiumlage ist der Halbhohlstanzniet aus DE 10 2014 201 976 A1 gerichtet. Bei einer Nietlänge von 5,5 mm nutzt er im Gegensatz zu EP 2 080 915 A2 keine spitz zulaufende Schneidkante am Nietfuß. Vielmehr wird trotz gleicher hochfester Decklage eine plane Schaftstirnfläche eingesetzt, deren Schneidkante das Ende der radialen Außenwand des Schafts bildet. Diese großflächige Schneidfläche fordert im Vergleich zu EP 2 080 915 A2 eine höhere Setzkraft.

Aufgrund der geringen Nietlänge sind diese Halbhohlstanzniete nicht für die Verbindung höherer Blechstapel geeignet.

Ein ähnlich kurzer Halbhohlstanzniet wie die oben beschriebenen offenbart WO 2011/023616 A1. Mit seiner begrenzten Länge von 4,5 mm ist die Anzahl oder Dicke der miteinander zu verbindenden Bauteile begrenzt. Des Weiteren ist auch das Aufnahmevolumen der Schaftbohrung zu gering, um für größere Blechdicken nutzbar zu sein.

Neben den offenbarten Halbhohlstanznieten der obigen Dokumente beschreibt WO 2023/057736 A1 zusätzlich zu einem Halbhohlstanzniet mit 6 mm Gesamtlänge einen Hohlniet mit bis zu 11 mm Gesamtlänge. Zwar hat ein Hohlniet ein nach oben offenes Aufnahmevolumen im Schaft, kann damit gleichzeitig aber auch keine dichte Fügeverbindung garantieren. Zudem fehlt es einem Hohlniet an der stabilisierenden Brückenwirkung des Nietkopfes. Dies gilt gleichermaßen für den Hohlniet der WO 2014/013232.

EP 3 626 982 B1 offenbart einen Halbhohlstanzniet für einen Stapel aus spröden Materialien mit einer großen Dicke. Entsprechend weist der Halbhohlstanzniet eine Länge im Bereich von 11-12 mm auf. Gleichzeitig ist eine axiale Kopfstärke mit 1,5 mm bis 3,5 mm zu stark, sodass ein Teil des Bohrungsvolumens zur Aufnahme eines Stanzbutzens verlorengeht. Des Weiteren ist die Form des Nietkopfes und des Nietfußes an das Fügen in spröden Materialien angepasst. Der ausschließlich kreisbogenförmige Übergang des Senkkopfes von der Kopfunterseite in die radiale Schaftaußenwand gewährleistet eine geringere Durchmesserzunahme des Schafts beim Übergang in den Senkkopf. Damit wird der radiale Druck des Senkkopfes auf das spröde Material reduziert, während der Halbhohlstanzniet gesetzt und der Senkkopf in die Decklage gedrückt wird. Ähnlich mechanisch entlastend wie bei der Senkkopfgeometrie gewährleistet der radial außen angeordnete Kreisbogen der Nietfußgeometrie ein vereinfachtes radial äußeres Abgleiten des Bauteilmaterials. Dieses vereinfachte oder leichtere Materialabgleiten verringert den radial einwärts gerichteten Druck des Bauteilmaterials auf den Schaft, sodass dieser leichter und früher während des Fügevorgangs aufspreizen kann.

Dies hat häufig den Nachteil, dass ein aufgeweiteter Nietschaft nicht ausreichend durch den Matrizenhohlraum entlastet und an der Matrize schädigend gestaucht wird.

US 2013/0336745 A1 beschreibt einen Halbhohlstanzniet, der zum Verbinden eines höheren Stapels von mehreren Blechen vorgesehen ist. An den zylindrischen Schaft einer Länge von 10 mm schließt sich ein Nietkopf mit einer axialen Kopfstärke von 2,5 mm an. Während einerseits der Nietkopf den Nietschaft stabilisiert, blockiert er andererseits einen Teil eines zusätzlichen Aufnahmevolumens im Schaft. Damit fehlt es dem Halbhohlstanzniet an effektiver Raumausnutzung seiner Konstruktion.

Einen weiteren Halbhohlstanzniet offenbart EP 3 287 210 A2. Dieser zeichnet sich durch einen zylindrischen Schaft aus, der in einen Nietkopf mündet. Der Nietkopf hat eine den Halbhohlstanzniet axial abschließende zylindrische Kopfplatte. Diese erstreckt sich in radialer Richtung über den Schaft hinaus. Die schaftzugewandte Seite der Kopfplatte geht kreisbogenförmig tangential in die Außenseite des Schafts über. An der schaftzugewandten Seite der Kopfplatte setzt die kreisbogenförmige Verbindung zum Schaft erst ungefähr auf der Mitte zwischen der radialen Außenseite von Schaft und Kopf an. Damit kann zwar der Halbhohlstanzniet relativ tief gesetzt werden, der Schaft fängt jedoch nur einen geringen Teil der Fügeenergie durch eine radiale Schaftaufweitung Richtung Nietkopf bzw. Kopfplatte ab. Dies hat den Nachteil, dass der Halbhohlstanzniet zu tief gesetzt wird.

DE 10 2021 133 544 A1 beschreibt einen Halbhohlstanzniet, der aufgrund seiner Gesamtlänge zur Verbindung eines höheren Stapels von Blechen geeignet ist. Um den Schaft des Halbhohlstanzniets für derartige Fügeaufgaben zu stabilisieren, nimmt eine radiale Dicke der umlaufenden Schaftwand axial in Richtung Nietschaft zu. Diese vorteilhafte Stabilisierung führt jedoch auch zu einer Reduktion des Aufnahmevolumens innerhalb der Schaftbohrung, in der der Stanzbutzen aufgenommen wird. Dieses eingeschränkte Aufnahmevolumen kann negative Druckspannungen im Schaft erzeugen, die den Fügevorgang nachteilig beeinflussen.

Im Hinblick auf den oben diskutierten Stand der Technik ist es somit Aufgabe vorliegender Erfindung, einen weiter verbesserten Halbhohlstanzniet bereitzustellen, der zum Verbinden mehrlagiger Blechstapel großer Dicke geeignet ist.

### 3. Zusammenfassung der Erfindung

Die obige Aufgabe wird gelöst durch einen Halbhohlstanzniet gemäß dem unabhängigen Patentanspruch 1, eine Stanznietverbindung gemäß dem unabhängigen Patentanspruch 9 und durch ein Herstellungsverfahren für den Stanzniet gemäß dem unabhängigen Patentanspruch 10. Vorteilhafte Ausführungsformen und Weiterentwicklungen ergeben sich aus der nachfolgenden Beschreibung, den Zeichnungen sowie den anhängenden Patentansprüchen.

Vorliegende Erfindung offenbart einen Halbhohlstanzniet, mit dem eine Verbindung zwischen mindestens zwei stapelförmig übereinander angeordneten und nicht vorgelochten Bauteilen herstellbar ist und der die folgenden Merkmale aufweist: einen in axialer Richtung geschlossenen Nietkopf, einen sich davon erstreckenden Nietschaft, eine Nietfußgeometrie an dem dem Nietkopf abgewandten Ende des Nietschafts und eine Gesamtlänge L des Halbhohlstanzniets im Bereich von 7 mm ≤ L ≤ 16 mm, der Nietkopf hat einen Kopfdurchmesser D_{K} in einem Bereich von 7,5 mm≤D_{K}≤7,9 mm, die Form eines Senkkopfes mit im axialen Querschnitt betrachtet radial außen und in axialer Richtung beginnend einem zylindrischen Abschnitt, einem sich daran anschließenden kegelförmigen Abschnitt und einem sich daran anschließenden und in den Nietschaft tangential übergehenden bogenförmigen Abschnitt, der Nietschaft hat eine hohlzylindrische Form mit einem äußeren Schaftdurchmesser D_{S} im Bereich von 5,2 mm ≤ D_{S} ≤ 5,6 mm, einem Bohrungsdurchmesser D_{B} im Bereich von 3,1 mm≤D_{B}≤3,5 mm, so dass sich ein Verhältnis des Bohrungsdurchmessers D_{B} zum Kopfdurchmesser D_{K} im Bereich von 0,39≤D_{B}/D_{K}≤0,5 ergibt, und mit einer Bohrungstiefe T_{B} im Bereich von 6 mm ≤ T_{B} ≤ 15 mm, sodass sich ein Bohrungsvolumen V_{B} im Nietschaft in Abhängigkeit von der Gesamtlänge L des Halbhohlstanzniets im Bereich von V_{B min} ≤ V_{B} ≤ V_{B max} mit V_{B min}=7,3 [mm²]·L [mm] und V_{B max}=9,0 [mm²]·L [mm] ergibt, und der Nietfuß weist in einem axialen Schnittbild eine über eine Schneidkante miteinander verbundene konische radiale Außenfase sowie eine konische radiale Innenfase auf, die konische Innenfase geht über einen Kreisbogenabschnitt tangential in eine radial innere Bohrungswand des Schafts über und die Außenfase sowie die Innenfase schließen einen Schneidwinkel W_{S} aus einem Bereich von 80° ≤ W_{S} ≤ 90° ein.

Vorliegende Erfindung stellt einen Halbhohlstanzniet großer Gesamtlänge bereit, also einer Gesamtlänge, die deutlich über bekannte 5 mm oder 6 mm lange Halbhohlstanzniete hinausgeht. Mit dieser großen Gesamtlänge wird die Voraussetzung zum Verbinden eines großen Stapels von Blechen oder von mindestens zwei übereinander angeordneten Blechen großer Stärke geschaffen. Zudem gewährleistet diese Gesamtlänge des Halbhohlstanzniets in Kombination mit einer zylindrischen Schaftbohrung großer Tiefe ein ausreichendes Aufnahmevolumen für den aufsteigenden Stanzbutzen der miteinander zu verbindenden Bauteile.

Dazu wurde der erfindungsgemäße Halbhohlstanzniet bewusst mit einem Senkkopf ausgestattet. Der Senkkopf entsteht durch in Fügerichtung direkt aufeinanderfolgend einen zylindrischen Abschnitt, einen konischen Abschnitt und einen im axialen Querschnitt des Halbhohlstanzniets konkaven oder bogenförmigen Abschnitt. Diese Senkkopfgeometrie ermöglicht mit einer geringen axialen Restkopfstärke ein größtmögliches Aufnahmevolumen der Schaftbohrung. Gleichzeitig wird durch den die Schaftbohrung verschließenden Senkkopf der Halbhohlstanzniet abgedichtet und mechanisch stabilisiert.

Der Nietfuß zeichnet sich durch eine Geometrie aus, die ein zu frühes Aufspreizen des Nietschafts an seinem dem Nietkopf gegenüberliegenden Ende verhindert. Denn eine konische radiale Außenfase und eine konische radiale Innenphase gleichen den Druck des in die Schaftbohrung einlaufenden Stanzbutzens und des den Schaft umgebenden Bauteilmaterials gegeneinander aus. Um diesen Ausgleich während des Fügevorgangs aufrechtzuerhalten, geht die konische Innenfase über einen Kreisbogenabschnitt tangential in die radiale Innenwand der Schaftbohrung über. Der kantenlose kreisbogenförmige Übergang ermöglicht ein Hineingleiten des Stanzbutzens in die Schaftbohrung, ohne dass dieser an der radialen Innenwand der Schaftbohrung reibschlüssig blockiert wird.

Gemäß einer ersten bevorzugten Ausgestaltung des Halbhohlstanzniets weist die konische radiale Außenfase eine Außenfasenhöhe H_{S} als eine Funktion der Gesamtlänge L des Halbhohlstanzniets gemäß H_{S}=0,032·L [mm] auf.

Um bevorzugt ein Aufspreizverhalten des Nietschafts während eines Fügevorgangs kontrollieren zu können, wird die Größe der radialen Außenfase angepasst. Dazu nimmt vorzugsweise mit zunehmender Gesamtlänge des Halbhohlstanzniets die axiale Höhe der radialen Außenfase, also die Außenfasenhöhe, gemäß gegebener Funktion zu. Die Gesamtlänge L geht dazu gemessen in der Längeneinheit Millimeter in die Funktion ein.

Mit zunehmender Außenfasenhöhe vergrößert sich auch die Fläche der Außenfase, an der das Bauteilmaterial angreift. Da das Bauteilmaterial vorzugsweise einer Materialverdrängung radialauswärts während des Fügevorgangs entgegenwirkt, stabilisiert es über die Außenfasenfläche den Nietschaft gegen ein Aufspreizen allein durch den aufsteigenden Stanzbutzen.

Ebenfalls bevorzugt hat die konische radiale Außenfase eine radiale Außenfasenbreite B_{S} im Bereich von 0,15 mm≤B_{S}≤0,35 mm.

Zur weiteren bevorzugten Kontrolle des Aufspreizverhaltens des Nietschafts wird die Flächengröße der radialen Außenfase am Nietfuß durch die radiale Außenfasenbreite bestimmt. Die radiale Außenfasenbreite wird vorzugsweise gemessen zwischen der Schneidkante und der radialen zylindrischen Außenseite des Nietschafts verlängert auf die axiale Höhe der Schneidkante. Mit der Wahl der Außenfasenbreite aus dem gegebenen Bereich ist die Außenfasenfläche in ihrer Größe anpassbar, um das Aufspreizverhalten des Nietschafts zu kontrollieren.

Gemäß einer weiteren bevorzugten Ausführungsform des Halbhohlstanzniets weist der Kreisbogenabschnitt axial anschließend an die konische radiale Innenfase einen Einlaufradius R_{S} in die Schaftbohrung von 0,2 mm≤R_{S}≤1,1 mm auf, insbesondere von 0,5 mm≤R_{S}≤1 mm.

Die Schneidkante des Nietfußes bestimmt einen ungefähren Butzendurchmesser, der während des Setzens des Halbhohlstanzniets in die mindestens zwei Bauteile in der Schaftbohrung aufgenommen wird. Setzversuche haben gezeigt, dass der in die Schaftbohrung versetzte Stanzbutzen häufig an Ecken oder Kanten an der radialen Innenwand der Schaftbohrung blockiert oder zumindest in seiner Aufnahmebewegung in die Schaftbohrung aufgehalten oder abgebremst wird. Um derartige Kanten oder Ecken zu vermeiden, in der gewöhnlich eine radiale konische Innenfase an der radialen Innenwand der Schaftbohrung endet, geht die konische Innenfase bevorzugt kreisbogenförmige tangential in die radiale Innenwand der Schaftbohrung über.

Vorzugsweise liegt die Außenfasenhöhe H_{S} im Verhältnis zum Einlaufradius R_{S} in einem Bereich von 0,2≤H_{S}/R_{S}≤1,2.

Während des Eintreibens des Halbhohlstanzniets in die mindestens zwei in Fügerichtung übereinander angeordneten Bauteile ist die umlaufende Wand des Nietschafts unterschiedlichen Radialkräften ausgesetzt. So erzeugt der in der Schaftbohrung in Richtung Nietkopf aufsteigende Stanzbutzen radiale Druckkräfte nach außen. Zudem erzeugt das an der radialen Außenseite des Nietschafts angreifende verdrängte Material des Bauteils radial einwärts gerichtete Druckkräfte. Eine bevorzugte ungefähre Ausgeglichenheit zwischen diesen einander entgegengesetzten radialen Druckkräften und/oder eine bevorzugte Begrenzung der Stärke dieser Druckkräfte ermöglicht einen verlässlichen Fügevorgangs. Um diesen verlässlichen Fügevorgang zu gewährleisten, wurde das oben beschriebene Verhältnis von Außenfasenhöhe und Einlaufradius des bogenförmigen Abschnitts der radialen Innenfase in einer Vielzahl von Versuchen als aussagekräftiges Kriterium erkannt.

Gemäß einer weiteren bevorzugten Ausführungsform des Halbhohlstanzniets aufbauend auf die erste Ausgestaltung oder eine Kombination mit dieser ersten Ausgestaltung liegt ein Verhältnis aus Schaftdurchmesser D_{S} zu Kopfdurchmesser D_{K} im Bereich von 0,5≤D_{S}/D_{K}≤0,75.

Damit der Nietkopf beim Fügen und zum Abschluss des Fügevorgangs eine ausreichende Haltekraft für den Stanzniet am Bauteil entwickelt, ohne in dieses ungünstig tief einzudringen, weist der Nietkopf einen größeren Durchmesser als der Nietschaft auf. Vorzugsweise übersteigt der Kopfdurchmesser den Schaftdurchmesser um 25 % bis 50 %. Entsprechend übersteigt der Kopfdurchmesser bevorzugt den Schaftdurchmesser um ein Viertel oder das Doppelte seiner Größe.

Weiter erfindungsgemäß bevorzugt hat der in axialer Richtung geschlossene Nietkopf eine minimale axiale Kopfstärke H_{K1}, also eine Kopfstärke in axialer Richtung des Halbhohlstanzniets, in Abhängigkeit von der Gesamtlänge L des Halbhohlstanzniets gemäß H_{K1}=0,1·L[mm]-0,1 mm.

Es hat sich beispielsweise im Vergleich zum Hohlniet gezeigt, dass ein geschlossener Nietkopf für zusätzliche Stabilität im Nietschaft sorgt. Zudem verhindert der Nietkopf ein übermäßiges Aufsteigen des Stanzbutzens über die Bauteiloberflächen hinaus. Um Risse im Nietkopf durch mechanische Spannungen erzeugt durch den aufsteigenden Stanzbutzen zu vermeiden, weist der Nietkopf eine bevorzugte Kopfstärke H_{K1} auf. Diese ist in Abhängigkeit von der Gesamtlänge des Halbhohlstanzniets gemäß obiger Formel definiert. Mit zunehmender Gesamtlänge des Halbhohlstanzniets nimmt auch die Größe des aufzunehmenden Butzens zu. Die damit bevorzugt verbundenen höheren mechanischen Belastungen des Nietkopfes werden durch eine an die Gesamtlänge angepasste axiale Kopfstärke des Nietkopfes ausgeglichen.

Gemäß einer weiteren bevorzugten Ausgestaltung des Halbhohlstanzniets in Kombination mit den oben beschriebenen Ausführungsformen weist der Halbhohlstanzniet eine Gesamtlänge L im Bereich von 10,5 mm≤L≤16 mm auf.

Es hat sich gezeigt, dass der erfindungsgemäß bevorzugte Halbhohlstanzniet gerade in einem Bereich seiner Gesamtlänge von 10,5 mm bis 16 mm besonders verlässliche Verbindungseigenschaften entwickelt.

Vorliegende Erfindung offenbart zudem eine Verbindung aus mindestens zwei stapelförmig übereinander angeordneten Metallbauteilen, die mit Hilfe des Halbhohlstanzniet gemäß mindestens einer der oben beschriebenen Ausgestaltungen miteinander verbunden sind.

Des Weiteren offenbart vorliegende Erfindung ein Herstellungsverfahren eines Halbhohlstanzniets, welches die folgenden Schritte aufweist: Bereitstellen eines Drahtabschnitts und Kaltschlagen eines Halbhohlstanzniets mit den Merkmalen mindestens einer der oben beschriebenen geometrischen Ausgestaltungen.

Das erfindungsgemäße Herstellungsverfahren des Halbhohlstanzniets baut auf bekannten Verfahren zum Kaltschlagen eines Halbhohlstanzniets aus einem Drahtabschnitt auf. Die dafür genutzten Werkzeuge sind an die konstruktiven Merkmale des oben beschriebenen Halbhohlstanzniets angepasst, um das entsprechende Ergebnis, also die vorteilhaften konstruktiven Eigenschaften des Halbhohlstanzniets, zu erzielen.

Das Herstellungsverfahren weist den weiteren bevorzugten Schritt auf: Aufbringen einer Korrosionsschutzschicht auf eine Oberfläche des kaltgeschlagenen Halbhohlstanzniets und/oder Aufbringen einer Flüssigkeitsbeschichtung zur Herabsetzung eines Reibkoeffizienten auf einer Oberfläche des Halbhohlstanzniets.

Um die oben beschriebenen positiven konstruktiven Eigenschaften in ihrer Lebensdauer zu unterstützen, wird ergänzend eine Korrosionsschutzschicht auf den kaltgeschlagenen Halbhohlstanzniet aufgebracht. Alternativ oder zusätzlich dazu wird die Oberfläche des Halbhohlstanzniets beschichtet, um im Kontakt mit dem Halbhohlstanzniet auftretende Reibung zu vermindern. Auf diese Weise wird das Setzen des Halbhohlstanzniets erleichtert und der damit verbundene Energieaufwand reduziert.

### 4. Zusammenfassung der begleitenden Zeichnungen

Die bevorzugten Ausführungsformen vorliegender Erfindung werden unter Bezugnahme auf die begleitende Zeichnung näher erläutert. Es zeigen:
- Figur 1: eine schematische Schnittdarstellung einer bevorzugten Ausführungsform des erfindungsgemäßen Halbhohlstanzniets,
- Figur 2: eine weitere schematische Schnittdarstellung einer bevorzugten Ausführungsform des erfindungsgemäßen Halbhohlstanzniets mit Bemaßung,
- Figur 3: eine schematische Darstellung einer Verbindung von mindestens zwei übereinander angeordneten Bauteilen mithilfe des erfindungsgemäß bevorzugten Halbhohlstanzniets vorliegender Erfindung und
- Figur 4: ein Flussdiagramm einer bevorzugten Ausführungsform eines Herstellungsverfahrens des Halbhohlstanzniets gemäß vorliegender Erfindung.

### 5. Detaillierte Beschreibung der bevorzugten Ausführungsformen

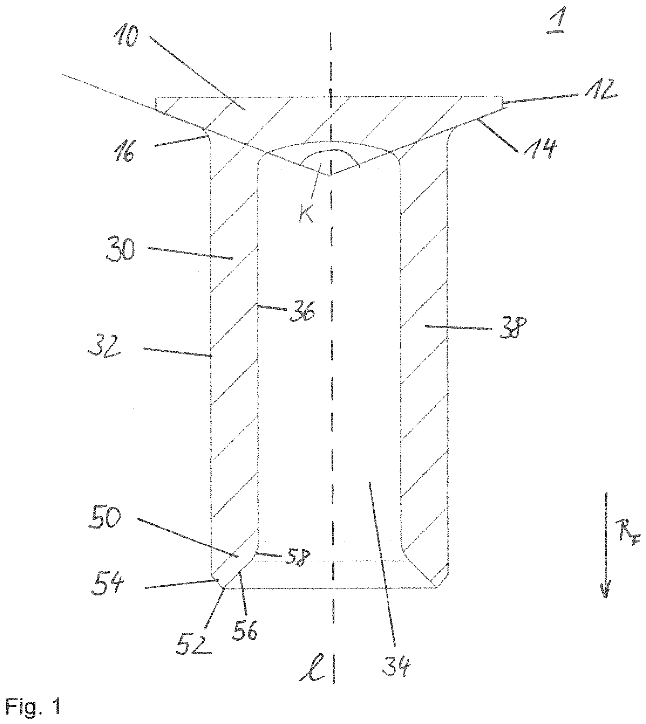

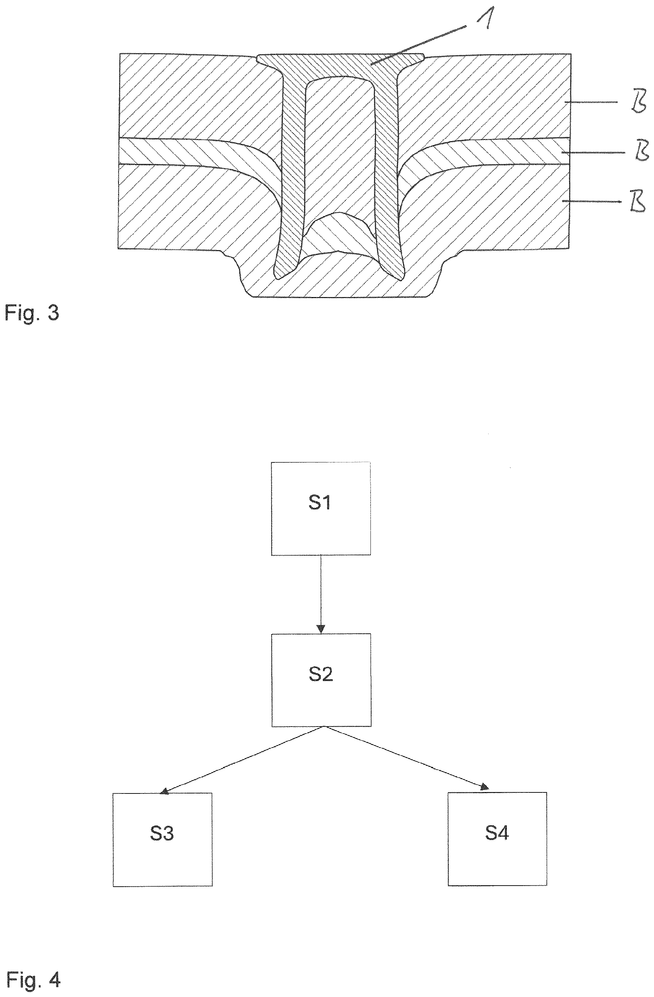

Eine bevorzugte Ausführungsform des erfindungsgemäßen Halbhohlstanzniets 1 ist in einer schematischen Darstellung in Figur 1 gezeigt. Mithilfe des Halbhohlstanzniets 1 lassen sich mindestens zwei übereinander angeordnete Blechlagen miteinander verbinden. Eine derartige Verbindung zwischen den Bauteilen B mithilfe des Halbhohlstanzniets 1 zeigt Figur 3. Gemäß einer bevorzugten Ausführungsform der vorliegenden Erfindung besteht zumindest ein Bauteil B aus Aluminium oder einer Aluminiumlegierung.

Der Halbhohlstanzniet 1 hat einen in axialer Richtung geschlossenen Nietkopf 10, einen sich von dem Nietkopf 10 erstreckenden Nietschaft 30 und einen den Nietschaft 30 axial abschließenden Nietfuß 50. Die axiale Richtung des Halbhohlstanzniets 1 wird durch die gestrichelt gezeichnete Mittellängsachse l in Figur 1 veranschaulicht.

Durch den axial geschlossenen Nietkopf 10 ist die hergestellte Verbindung der Bauteile B gegen Korrosion geschützt, da weder Schmutz noch Feuchtigkeit in die Nietschaft 30 eindringen können.

Der Halbhohlstanzniet 1 weist eine Gesamtlänge L im Bereich von 7 mm ≤ L ≤ 16 mm auf.

Die Nietkopf 10 hat einen Kopfdurchmesser D_{K} in einem Bereich von 7,5 mm ≤ D_{K} ≤ 7,9 mm.

Der Nietkopf 10 hat zudem die Form eines Senkkopfes. Der Senkkopf setzt sich in einer Fügerichtung R_{F} im axialen Querschnitt der Figur 1 betrachtet aus den folgenden Abschnitten zusammen. An dem dem Nietfuß 50 abgewandten Ende des Halbhohlstanzniets 1 weist der Nietkopf 10 einen zylindrischen Abschnitt 12 mit einer zylindrischen Mantelfläche auf. An diesen zylindrischen Abschnitt 12 schließt sich in Fügerichtung R_{F} ein kegelförmiger Abschnitt 14 an. Der kegelförmige Abschnitt 14 schließt vorzugsweise einen Kegelwinkel K in einem Bereich von120 ° ≤ K ≤ 160 ° ein.

Der kegelförmige Abschnitt 14 geht in einem bogenförmigen Abschnitt 16 tangential in eine radial äußere Mantelfläche 32 des Nietschafts 30 über.

Vorzugsweise ist eine zusammengefasste axiale Ausdehnung H_{K2} der drei Abschnitte zylindrischer Abschnitt 12, kegelförmiger Abschnitt 14 und bogenförmiger Abschnitt 16 geringer als eine bevorzugte axiale Kopfstärke H_{K1}, insbesondere eine minimale axiale Kopfstärke H_{K1}.

Die minimale axiale Kopfstärke H_{K1} ergibt sich als Differenz aus der Gesamtlänge L des Halbhohlstanzniets 1 und einer Bohrungstiefe T_{B} einer zentralen Schaftbohrung 34.

Ein bevorzugter Grund für eine größere minimale axiale Kopfstärke H_{K1} im Vergleich zur zusammengefassten axialen Ausdehnung H_{K2} besteht darin, dass sich ansonsten während der Kaltumformung bzw. des Kaltschlagens des Halbhohlstanzniets 1 aus einem Drahtrohling ein radialer Materialeinfall in einem radialäußeren Bereich des Bohrungsgrundes der zentralen Schaftbohrung 34 bilden könnte. Dies würde zu einer mechanischen Schwächung des Halbhohlstanzniets 1 führen.

Gemäß einer bevorzugten Ausführungsform des erfindungsgemäßen Halbhohlstanzniets 1 weist der geschlossene Nietkopfs 10 die axiale Kopfstärke H_{K1} in Abhängigkeit von der Gesamtlänge L des Halbhohlstanzniets 1 gemäß H_{K1} = 0,1·L [mm]-0,1 mm auf. Zur Anwendung der gegebenen Gleichung wird die Gesamtlänge L in Millimetern angegeben, wie es durch die eckigen Klammern zum Ausdruck gebracht wird.

Gemäß einer bevorzugten Ausführungsform des erfindungsgemäßen Halbhohlstanzniets 1 liegt die minimale axiale Kopfstärke H_{K1} in einem Bereich von 0,9 mm ≤ H_{K1} ≤ 3,1 mm.

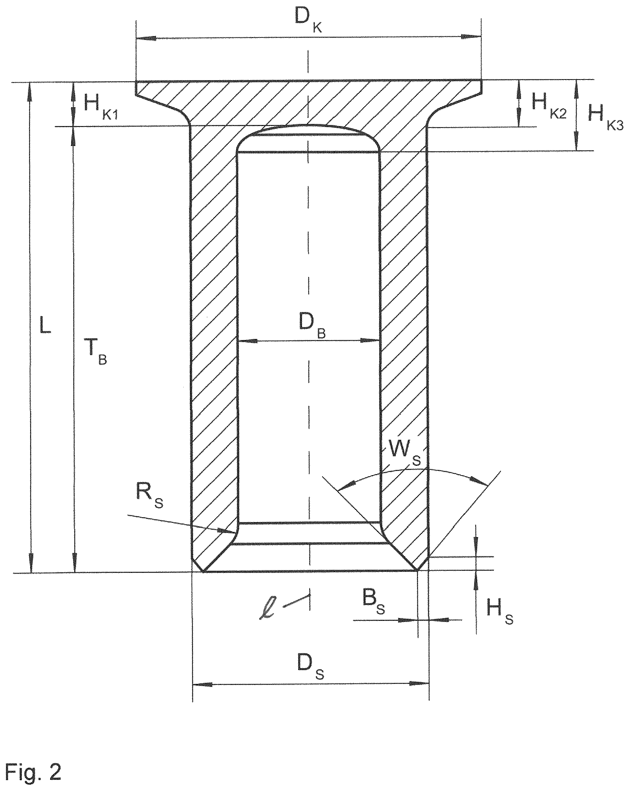

Der Nietschaft 30 hat die in den schematischen Schnittdarstellungen der Figuren 1 und 2 erkennbare hohlzylindrische Form. Der hohlzylindrische Nietschaft 30 hat einen äußeren Durchmesser D_{S} im Bereich von 5,2 mm ≤ D_{S} ≤ 5,6 mm.

Die Schaftbohrung 34 hat einen Bohrungsdurchmesser D_{B} im Bereich von 3,1 mm ≤ D_{B} ≤ 3,5 mm. Zudem weist die Schaftbohrung 34 eine Bohrungstiefe T_{B} in einem Bereich von 6 mm ≤ T_{B} ≤ 15 mm auf. Die Bohrungstiefe T_{B} wird dabei bevorzugt entlang der Mittellängsachse l gemessen. Damit weist der Halbhohlstanzniet 1 ein bevorzugtes Verhältnis von Bohrungstiefe T_{B} zur Gesamtlänge L des Halbhohlstanzniets im Bereich von 0,7 bis 0,95 auf.

Die Hauptfunktion der tiefen Bohrung ist die Materialaufnahme des verdrängten Materials von den Bauteilen B. Durch eine große Materialaufnahme wird das notwendige Matrizenvolumen verringert und es können Matrizen geringerer Höhe für die Herstellung einer Stanznietverbindung verwendet werden.

Zusätzlich führt eine zu geringe Materialaufnahme an Bauteilmaterial in die Nietbohrung 34 zu einem Aufstauen von Bauteilmaterial vor der Nietschneide 52 während des Fügeprozesses, welches zu verschlechterten Schneideigenschaften des Nietfußes 50 (siehe unten) und einer potenziellen Schneidenumschlingung führen kann.

Daher weist der erfindungsgemäße Halbhohlstanzniet 1 ein Bohrungsvolumen V_{B} im Nietschaft 30 in Abhängigkeit von der Gesamtlänge L des Halbhohlstanzniets 1 im Bereich von V_{Bmin} ≤ V_{B} ≤ V_{Bmax} mit V_{Bmin} =7,3 mm² · L [mm] und V_{B max}= 9,0 mm² · L [mm] auf.

Um mithilfe des zur Verfügung stehenden Bohrungsvolumens V_{B} innerhalb der Schaftbohrung 34 genügend Material in Form des Stanzbutzens aufnehmen zu können, ist der oben definierte Bohrungsdurchmesser D_{B} der Schaftbohrung 34 erforderlich. Damit der Halbhohlstanzniet 1 während des Fügevorgangs mit seinem Nietfuß 50 lange schneidet und sich nicht frühzeitig verformt, ist eine bestimmte Wandstärke S_{W} des Nietschafts 30 erforderlich. Diese Wandstärke S_{W} des Nietschafts 30 ergibt sich aus der Gleichung S_{W} = 1/2 (D_{S} - D_{B}), wobei die Wandstärke S_{W} bevorzugt in einem Bereich von 0,85 mm ≤ S_{W} ≤1,25 mm liegt.

Es hat sich in Versuchen als vorteilhaft gezeigt, wenn ein Quotient aus Bohrungsdurchmesser D_{B} und Durchmesser D_{K} in einem bestimmten Bereich liegen. Dieser Bereich unterstreicht eine noch ausreichende Kopfstabilität bei größtmöglichen Aufnahmevolumen der Schaftbohrung 34. Erfindungsgemäß liegt das Verhältnis von Bohrungsdurchmesser D_{B} und Kopfdurchmessers D_{K} in einem Bereich von 0,39 ≤ D_{B}/D_{K} ≤0,5.

Zudem unterstreicht der Bereich obiger Verhältnisgleichung den Zusammenhang zwischen erstens dem Energieaufwand zum Setzen des Halbhohlstanzniets 1. Denn der Nietschaft 30 mit einer Schaftbohrung 34 diesen Durchmessers benötigt eine hohe Setzkraft bzw. Setzenergie zum Ausstanzen des Stanzbutzens und zum Aufnehmen des Stanzbutzens in die Schaftbohrung 34.

Die obige Verhältnisgleichung hebt den Zusammenhang mit zweitens einem kontrollierten Energieverbrauch während des Setzvorgangs hervor. Denn während die Zufuhr der Setzkraft und Setzenergie über einen Stempel eines Setzgeräts den Setzvorgang startet, sorgt ein sich radial bis zu seinem Kopfdurchmesser aufweitender Senkkopf 10 für eine bevorzugte Umwandlung der zugeführten Setzenergie in Verdrängungsenergie des Bauteilmaterials zumindest der Decklage des Bauteilstapels. Somit sorgt vorzugsweise ein festgelegter Kopfdurchmesser D_{K} für einen gezielten Abbau von noch vorhandener Setzenergie.

Die obige Energiebetrachtung während des Fügevorgangs, also das Wechselverhältnis zwischen der dem Halbhohlstanzniet 1 zugeführten Setzenergie und dem Energieverbrauch durch geometriebedingte Merkmale des Halbhohlstanzniets 1 wird ebenfalls bevorzugt durch ein Verhältnis des Schaftdurchmessers D_{S} zum Kopfdurchmesser D_{K} zum Ausdruck gebracht. Für dieses Verhältnis gilt gemäß einer bevorzugten Ausführungsform vorliegender Erfindung 0,5 ≤ D_{S}/D_{K} ≤0,75.

Der Halbhohlstanzniet 1 hat zudem einen Nietfuß 50 mit einer bestimmten Nietfußgeometrie, deren bevorzugte Details in den Figuren 1 und 2 zu erkennen sind.

Damit dicke und/oder mehrlagige Blechkombinationen und die damit bevorzugt einhergehenden Materialkombinationen gefügt werden können, wird eine Nietschneide oder Schneidkante 52 benötigt. Die Schneidkante 52 durchtrennt das Bauteilmaterial und erzeugt auf diese Weise einen Stanzbutzen. Zudem muss die Schneidkante 52, die durch die direkt angrenzenden weiteren konstruktiven Merkmale des Nietfußes 50 beeinflusst wird, in der Lage sein, eine Schneidenumschlingung durch das zu durchtrennende Bauteilmaterial zu verhindern. Dazu ist es erforderlich, dass die Nietfußgeometrie ausreichend stabil ist, um sich nicht zu früh zu verformen. Zudem gewährleistet diese Stabilität, dass der Nietfuß 50 in Fügerichtung bis in die letzte Materiallage der miteinander zu verbindenden Bauteile B eindringt.

Zur Erreichung obiger Ziele wird die Schneidkante 52 durch eine konische radiale Außenfase 54 und eine konische radiale Innenfase 56 gebildet. Die Außenfase 54 und die Innenfase 56 sind direkt angrenzend an die Schneidkante 52 im axialen Querschnitt des Halbhohlstanzniets 1 geradlinig ausgebildet und schließen einen Schneidwinkel W_{S} im Bereich von 80° ≤ W_{S} ≤90° ein.

Die konische radiale Innenfase 56 geht über einen Kreisbogenabschnitt 58 tangential in eine radial innere Bohrungswand 36 des Nietschafts 30 über.

Die konische radiale Außenfase 54, die vorzugsweise eine den Nietschaft 30 geschlossen umgebende Ringfläche bildet bzw. darstellt, erzeugt einen radial einwärts gerichteten Druck auf den Nietfuß 50 und damit den Nietschaft 30 während des Fügevorgangs. Dieser radial einwärts gerichtete Druck auf die Schaftwand 38 wirkt bevorzugt einem radial auswärts gerichteten Druck des in den Nietschaft 30 einlaufenden Stanzbutzens entgegen. Somit verhindert eine gezielt eingestellte Größe der Fläche der konischen radialen Außenfase 54 ein zu frühes Aufspreizen des Nietschafts 30.

Zur Kontrolle der Fläche der konischen radialen Außenfase 54 weist die Außenfase 54 im axialen Schnittbild des Halbhohlstanzniets 1 eine bevorzugte Außenfasenhöhe H_{S} auf. Die Außenfasenhöhe H_{S} wird gemäß Figur 2 parallel zur Mittellängsachse l des Halbhohlstanzniets 1 gemessen. Sie ist bestimmt durch die axiale Entfernung zwischen der Nietschneide 52 und dem Punkt, in dem die konische Außenfase 54 auf die radiale äußere Mantelfläche 32 des Nietschafts 30 trifft.

Vorzugsweise ist die Außenfasenhöhe H_{S} bestimmt in Abhängigkeit von der Gesamtlänge L des Halbhohlstanzniets 1 gemäß H_{S}= 0,032 · L [mm].

Zudem bevorzugt wird die Fläche der Außenfase 54 weiter bestimmt durch eine radiale Außenfasenbreite B_{S} in einem Bereich von 0,15 mm ≤ B_{S} ≤0,35 mm.

Wie oben bereits erwähnt, geht die konische radiale Innenfase 56 über den Kreisbogenabschnitt 58 tangential in die radiale Innenwand 36 der Schaftbohrung 34 über. Durch den Kreisbogenabschnitt 58 wird verhindert, dass die konische radiale Innenfase 56 und die radiale Innenwand 36 der Schaftbohrung 34 eine Kante oder einen Absatz bilden. Denn die Praxis hat gezeigt, dass der in die Schaftbohrung 34 aufsteigende Stanzbutzen dazu neigt, an derartigen Kanten und Absätzen in seiner aufsteigenden Bewegung blockiert oder behindert zu werden.

Gemäß einer bevorzugten Ausführungsform vorliegender Erfindung weist der Kreisbogenabschnitt 58 einen Radius R_{S} in einem Bereich von 0,2 mm ≤R_{S} ≤1,1 mm auf. Gemäß einer weiteren bevorzugten Ausführungsform vorliegender Erfindung liegt der Radius R_{S} in einem Bereich von 0,5 mm ≤ R_{S} ≤1 mm.

Mit dieser Größe und dem Verlauf des Kreisbogenabschnitts 58, welche durch den Radius R_{S} bestimmt sind, wird vorzugsweise ein ausgeglichenes Verhältnis zwischen der den Nietschaft 30 aufspreizenden mechanischen Belastung durch den aufsteigenden Stanzbutzen und die radial einwärts wirkenden Kräfte des verdrängten Bauteilmaterials auf die konische radiale Außenfase 54 geschaffen.

Erfindungsgemäß bevorzugt wird das oben genannte ausgeglichene Verhältnis zahlenmäßig definiert durch einen Quotienten aus der Außenfasenhöhe H_{S} und dem Einlaufradius R_{S}. Dieser Quotient liegt vorzugsweise in einem Bereich von 0,2 ≤ H_{S}/R_{S} ≤1,2.

Die oben beschriebenen geometrischen Merkmale des Halbhohlstanzniets 1 wirken sich bevorzugt besonders vorteilhaft aus, wenn der Halbhohlstanzniet 1 eine Gesamtlänge L im Bereich von 10,5 mm ≤ L ≤16 mm aufweist.

Gemäß einer weiteren bevorzugten Ausführungsform vorliegender Erfindung wird auf den Halbhohlstanzniet 1 eine Flüssigkeitsbeschichtung zur Herabsetzung eines Reibkoeffizienten seiner Oberfläche aufgebracht. Diese bevorzugte Beschichtung erfüllt vorzugsweise zwei Funktionen. Zunächst wird durch diese Beschichtung ein Aufsteigen des Stanzbutzens in der Schaftbohrung 34 erleichtert. Da durch die Beschichtung auch die Reibung an der radialen äußeren Mantelfläche 32 des Nietschafts 30 reduziert wird, können mit der Beschichtung auch notwendige Setzkräfte für den Halbhohlstanzniet 1 vermindert werden.

Im Gegensatz dazu würden eine hohe Reibung an der Oberfläche des Halbhohlstanzniets und ein langsamer Aufstieg des Stanzbutzens zu einem Materialaufstau vor der Schneidkante 52, zu einer Schneidenumschlingung am Nietfuß 50 und zu einem potenziell zu frühen Aufspreizen des Nietschafts 30 während des Fügevorgangs führen.

Vorzugsweise setzt sich die Beschichtung aus zwei Komponenten zusammen: einer korrosionsbeständigen Grundbeschichtung und einem Topcoat zur Einstellung der Reibungseigenschaften. Die Grundbeschichtung kann galvanisch oder mechanisch aufgebracht werden. Der Topcoat wird als Trockengleitfilm durch eine Flüssigbeschichtung aufgebracht.

Zudem umfasst vorliegende Erfindung die schematisch in Figur 3 dargestellte Verbindung von mindestens zwei stapelförmig übereinander angeordneten Bauteilen B. Diese sind mit dem Halbhohlstanzniet 1 gemäß einer der oben beschriebenen Ausgestaltungen miteinander verbunden.

Des Weiteren offenbart vorliegende Erfindung das Herstellungsverfahren des Halbhohlstanzniets 1 gemäß dem Flussdiagramm in Figur 4. Es umfasst die folgenden Schritte: Bereitstellen eines Drahtabschnitts (S1), Kaltschlagen eines Halbhohlstanzniets mit den Merkmalen mindestens eines der oben beschriebenen Ausgestaltungen (Schritt S2), vorzugsweise Aufbringen einer Korrosionsschutzschicht auf den kaltgeschlagenen Halbhohlstanzniet 1 (Schritt S3) und/oder vorzugsweise Aufbringen einer Flüssigkeitsbeschichtung zur Herabsetzung eines Reibkoeffizienten einer Oberfläche des Halbhohlstanzniets 1 (Schritt S4).

### Bezugszeichenliste

- 1: Halbhohlstanzniet
- 10: Nietkopf
- 12: zylindrischer Abschnitt
- 14: kegelförmiger Abschnitt
- 16: bogenförmiger Abschnitt
- 30: Nietschaft
- 32: radial äußere Mantelfläche
- 34: zentrale Schaftbohrung
- 36: innere Bohrungswand
- 38: Schaftwand
- 50: Nietfuß
- 52: Nietschneide/Schneidkante
- 54: radiale Außenfase
- 56: radiale Innenfase
- 58: Kreisbogenabschnitt
- B: Bauteile
- D_{K}: Kopfdurchmesser
- R_{F}: Fügerichtung
- K: Kegelwinkel
- H_{K1}: minimale axiale Kopfstärke
- T_{B}: Bohrungstiefe
- S_{W}: Wandstärke des Nietschafts

## Patentansprüche

1. Ein Halbhohlstanzniet (1), mit dem eine Verbindung zwischen mindestens zwei stapelförmig übereinander angeordneten und nicht vorgelochten Bauteilen (B) herstellbar ist, der die folgenden Merkmale aufweist:
a. einen in axialer Richtung geschlossenen Nietkopf (10), einen sich davon erstreckenden Nietschaft (30), eine Nietfußgeometrie (50) an dem dem Nietkopf (10) abgewandten Ende des Nietschafts (30) und eine Gesamtlänge L des Halbhohlstanzniets (1) im Bereich von 7 mm ≤ L ≤ 16 mm,
b. der Nietkopf (10) hat einen Kopfdurchmesser D_{K} in einem Bereich von 7,5 mm≤D_{K}≤7,9 mm, die Form eines Senkkopfes mit im axialen Querschnitt betrachtet radial außen und in axialer Richtung beginnend einem zylindrischen Abschnitt (12), einem sich daran anschließenden kegelförmigen Abschnitt (14) und einem sich daran anschließenden und in den Nietschaft (30) tangential übergehenden bogenförmigen Abschnitt (16),
c. der Nietschaft (30) hat eine hohlzylindrische Form mit einem äußeren Schaftdurchmesser D_{S} im Bereich von 5,2 mm ≤ D_{S} ≤ 5,6 mm, einem Bohrungsdurchmesser D_{B} im Bereich von 3,1 mm≤D_{B}≤3,5 mm, so dass sich ein Verhältnis des Bohrungsdurchmessers D_{B} zum Kopfdurchmesser D_{K} im Bereich von 0,39≤D_{B}/D_{K}≤0,5 ergibt, und einer Bohrungstiefe T_{B} in einem Bereich von 6 mm ≤ T_{B} ≤ 15 mm, sodass sich ein Bohrungsvolumen V_{B} im Nietschaft in Abhängigkeit von der Gesamtlänge L des Halbhohlstanzniets (1) im Bereich von V_{B min} ≤ V_{B} ≤ V_{B max} mit V_{B min}=7,3 mm²·L [mm] und V_{B max}=9,0 mm²·L [mm] ergibt,
d. der Nietfuß (50) weist in einem axialen Schnittbild eine über eine Schneidkante (52) miteinander verbundene konische radiale Außenfase (54) sowie eine konische radiale Innenfase (56) auf, die konische Innenfase (56) geht über einen Kreisbogenabschnitt (58) tangential in eine radial innere Bohrungswand (36) des Schafts über und die Außenfase (54) sowie die Innenfase (56) schließen einen Schneidwinkel W_{S} aus einem Bereich von 80° ≤ W_{S} ≤ 90° ein.

2. Der Halbhohlstanzniet (1) gemäß Patentanspruch 1, in dem die konische radiale Außenfase (54) eine Außenfasenhöhe H_{S} als eine Funktion der Gesamtlänge L des Halbhohlstanzniets (1) gemäß H_{S}=0,032·L [mm] aufweist.

3. Der Halbhohlstanzniet (1) gemäß Patentanspruch 2, in dem die konische radiale Außenfase (54) eine radiale Außenfasenbreite B_{S} im Bereich von 0,15 mm≤B_{S}≤0,35 mm aufweist.

4. Der Halbhohlstanzniet (1) gemäß Patentanspruch 3, in dem der Kreisbogenabschnitt (58) axial anschließend an die konische radiale Innenfase (56) einen Einlaufradius R_{S} in die Schaftbohrung (34) von 0,2 mm≤R_{S}≤1,1 mm aufweist, insbesondere von 0,5 mm≤R_{S}≤1 mm.

5. Der Halbhohlstanzniet (1) gemäß Patentanspruch 4, in dem die Außenfasenhöhe H_{S} im Verhältnis zum Einlaufradius R_{S} in einem Bereich von 0,2≤H_{S}/R_{S}≤1,2 liegt.

6. Der Halbhohlstanzniet (1) gemäß mindestens einem der vorhergehenden Patentansprüche, in dem ein Verhältnis aus Schaftdurchmesser D_{S} zu Kopfdurchmesser D_{K} im Bereich von 0,5≤D_{S}/D_{K}≤0,75 liegt.

7. Der Halbhohlstanzniet (1) gemäß mindestens einem der vorhergehenden Patentansprüche, in dem der in axialer Richtung geschlossene Nietkopf (10) eine axiale Kopfstärke H_{K1} in Abhängigkeit von der Gesamtlänge L des Halbhohlstanzniets (1) gemäß H_{K1}=0,1·L-0,1 mm aufweist.

8. Der Halbhohlstanzniet (1) gemäß mindestens einem der vorhergehenden Patentansprüche, der eine Gesamtlänge L im Bereich von 10,5 mm≤L≤16 mm aufweist.

9. Eine Verbindung aus mindestens zwei stapelförmig übereinander angeordneten Metallbauteilen (B), die mit Hilfe des Halbhohlstanzniets (1) gemäß mindestens einem der vorhergehenden Patentansprüche miteinander verbunden sind.

10. Ein Herstellungsverfahren eines Halbhohlstanzniets (1) , welches die folgenden Schritte aufweist:
a. Bereitstellen eines Drahtabschnitts (S1) und
b. Kaltschlagen (S2) eines Halbhohlstanzniets (1) mit den Merkmalen mindestens eines der vorhergehenden Patentansprüche 1 bis 9.

11. Das Herstellungsverfahren gemäß Patentanspruch 10 mit dem weiteren Schritt:
c. Aufbringen einer Korrosionsschutzschicht auf den kaltgeschlagenen Halbhohlstanzniet (1) (S3).

12. Das Herstellungsverfahren gemäß Patentanspruch 10 oder 11 mit dem weiteren Schritt:
d. Aufbringen einer Flüssigkeitsbeschichtung zur Herabsetzung eines Reibkoeffizienten einer Oberfläche des Halbhohlstanzniets (1) (S4).

## Claims

1. A semi-hollow self-piercing rivet (1) with which a connection between at least two components (B) that are arranged one upon the other in a stack-like manner and are not prepunched is establishable and which comprises the following features:
a. a rivet head (10) that is closed in axial direction, a rivet shaft (30) extending from same, a rivet foot geometry (50) at the end of the rivet shaft (30) which faces away from the rivet head (10) and an overall length L of the semi-hollow self-piercing rivet (1) in the range from 7 mm ≤ L ≤ 16 mm,
b. the rivet head (10) has a head diameter D_{K} in a range from 7.5 mm ≤ D_{K} ≤ 7.9 mm, the form of a countersunk head with when viewed in axial cross section radially outside and starting in axial direction a cylindrical section (12), a truncated cone like section (14) following the cylindrical section (12) and an arc-like section (16) tangentially transitioning into the rivet shaft (30) and following the cone like section (14),
c. the rivet shaft (30) has a hollow cylindrical form with an outer shaft diameter D_{S} in the range from 5.2 mm ≤ D_{S} ≤ 5.6 mm, a bore hole diameter D_{B} in the range from 3.1 mm ≤ D_{B} ≤ 3.5 mm so that a relation of the bore hole diameter D_{B} to the head diameter D_{K} in the range from 0.39 ≤ D_{B}/D_{K} ≤ 0.5 arises, and with a bore hole depth T_{B} in the range from 6 mm ≤ T_{B} ≤ 15 mm so that a bore hole volume V_{B} in the rivet shaft (30) depending on the overall length L of the semi-hollow self-piercing rivet (1) in the range from V_{B} min ≤ V_{B} ≤ V_{B} max with V_{B} min = 7.3 mm²·L [mm] and V_{B} max = 9.0 mm²·L [mm] arises,
d. in an axial sectional view, the rivet foot (50) has a conical radial outer chamfer (54) as well as a conical radial inner chamfer (56) interconnected by means of a cutting edge (52), with the conical inner chamfer (56) tangentially transitioning into a radially inner bore wall (36) of the shaft via a circular arc section (58) and the outer chamfer (54) as well as the inner chamfer (56) enclose a cutting angle W_{S} in the range from 80° ≤ W_{S} ≤ 90°.

2. The semi-hollow self-piercing rivet (1) according to claim 1, wherein the conical radial outer chamfer (54) has an outer chamfer height H_{S} as a function of the overall length L of the semi-hollow self-piercing rivet (1) according to H_{S}=0.032·L [mm].

3. The semi-hollow self-piercing rivet (1) according to claim 2, wherein the conical radial outer chamfer (54) has a radial outer chamfer width B_{S} in the range from 0.15 mm ≤B_{S}≤0.35 mm.

4. The semi-hollow self-piercing rivet (1) according to claim 3, wherein the circular arc section (58) axially following the conical radial inner chamfer (56) comprises an entry radius R_{S} into the shaft bore hole (34) of 0.2 mm ≤R_{S}≤1.1 mm, in particular 0.5 mm ≤R_{S}≤1mm.

5. The semi-hollow self-piercing rivet (1) according to claim 4, wherein the outer chamfer height H_{S} in relation to the entry radius R_{S} lies in a range from 0.2≤H_{S}/R_{S}≤1.2.

6. The semi-hollow self-piercing rivet (1) according to at least one of the preceding claims, wherein a relation of shaft diameter D_{S} to head diameter D_{K} lies in the range from 0.5≤D_{S}/D_{K}≤0.75.

7. The semi-hollow self-piercing rivet (1) according to at least one of the preceding claims, wherein the rivet head (10) which is closed in axial direction has an axial head thickness H_{K1} depending on the overall length L of the semi-hollow self-piercing rivet (1) according to H_{K1}=0.1·L-0.1 mm.

8. The semi-hollow self-piercing rivet (1) according to at least one of the preceding claims, having an overall length L in the range from 10.5 mm≤L≤16 mm.

9. A connection of at least two metal components (B) that are arranged stack-like one upon the other and which are connected with each other with the help of the semi-hollow self-piercing rivet (1) according to at least one of the preceding claims.

10. A manufacturing method of a semi-hollow self-piercing rivet (1) which comprises the following steps:
a. providing a wire section (S1) and
b. cold forming (S2) a semi-hollow self-piercing rivet (1) with the features of at least one of the preceding claims 1 to 9.

11. The manufacturing method according to claim 10 with the further step:
c. applying a corrosion protection layer onto the cold formed semi-hollow self-piercing rivet (1) (S3).

12. The manufacturing method according to claim 10 or 11 with the further step:
d. applying a liquid coating to reduce a friction coefficient of a surface of the semi-hollow self-piercing rivet (1) (S4).

## Revendications

1. Rivet de poinçonnage semi-tubulaire (1) permettant de réaliser un joint entre au moins deux composants (B) superposés en forme de pile et non pré-percés, présentant les caractéristiques suivantes :
a. une tête de rivet (10) fermée dans la direction axiale, une tige de rivet (30) s'étendant à partir de celle-ci, une géométrie de pied de rivet (50) à l'extrémité de la tige de rivet (30) opposée à la tête de rivet (10), et une longueur totale L du rivet de poinçonnage semi-tubulaire (1) dans la plage de 7 mm ≤ L ≤ 16 mm,
b. la tête de rivet (10) présente un diamètre de tête D_{K} dans la plage de 7,5 mm ≤ D_{K} ≤ 7,9 mm, la forme d'une tête fraisée dotée d'une section cylindrique (12), vue en coupe axiale, en partant radialement de l'extérieur et dans la direction axiale, suivie d'une section conique (14), puis d'une section arquée (16) prolongeant tangentiellement la tige de rivet (30),
c. la tige de rivet (30) présente une forme cylindrique creuse, avec un diamètre de tige extérieur D_{S} dans la plage de 5,2 mm ≤ D_{S} ≤ 5,6 mm, un diamètre d'alésage D_{B} dans la plage de 3,1 mm ≤ D_{B} ≤ 3,5 mm, de sorte que le rapport entre le diamètre d'alésage D_{B} et le diamètre de tête D_{K} est compris dans la plage de 0,39 ≤ D_{B} / D_{K} ≤ 0,5, et une profondeur d'alésage T_{B} dans une plage de 6 mm ≤ T_{B} ≤ 15 mm, de sorte qu'un volume d'alésage V_{B} dans la tige de rivet, en fonction de la longueur totale L du rivet de poinçonnage semi-tubulaire (1), est compris dans la plage de V_{B min} ≤ V_{B} ≤ V_{B max} avec V_{B min} = 7,3 mm² · L [mm] et V_{B max} = 9,0 mm²· L [mm],
d. le pied de rivet (50) présente, en coupe axiale, un chanfrein extérieur radial conique (54) ainsi qu'un chanfrein intérieur radial conique (56) reliés entre eux par une arête de coupe (52), le chanfrein intérieur conique (56) se raccordant tangentiellement à une paroi d'alésage intérieure radiale (36) de la tige par le biais d'une section d'arc de cercle (58), et le chanfrein extérieur (54) ainsi que le chanfrein intérieur (56) forment un angle de coupe W_{S} dans une plage de 80° ≤ W_{S} ≤ 90°.

2. Rivet de poinçonnage semi-tubulaire (1) selon la revendication 1, dans lequel le chanfrein extérieur radial conique (54) présente une hauteur de chanfrein extérieur H_{S}, en fonction de la longueur totale L du rivet de poinçonnage semi-tubulaire (1), selon H_{S} = 0,032 · L [mm].

3. Rivet de poinçonnage semi-tubulaire (1) selon la revendication 2, dans lequel le chanfrein extérieur radial conique (54) présente une largeur de chanfrein extérieur B_{S} dans la plage de 0,15 mm ≤ B_{S} ≤ 0,35 mm.

4. Rivet de poinçonnage semi-tubulaire (1) selon la revendication 3, dans lequel la section d'arc de cercle (58) présente, axialement à la suite du chanfrein intérieur radial conique (56), un rayon d'entrée R_{S} dans l'alésage de tige (34) de 0,2 mm ≤ R_{S} ≤ 1,1 mm, en particulier de 0,5 mm ≤ R_{S} ≤ 1 mm.

5. Rivet de poinçonnage semi-tubulaire (1) selon la revendication 4, dans lequel le rapport entre la hauteur de chanfrein extérieur H_{S} et le rayon d'entrée R_{S} est compris dans la plage de 0,2 ≤ H_{S} / R_{S} ≤ 1,2.

6. Rivet de poinçonnage semi-tubulaire (1) selon l'une au moins des revendications précédentes, dans lequel un rapport entre le diamètre de tige D_{S} et le diamètre de tête D_{K} est compris dans la plage de 0,5 ≤ D_{S} / D_{K} ≤ 0,75.

7. Rivet de poinçonnage semi-tubulaire (1) selon l'une au moins des revendications précédentes, dans lequel la tête de rivet (10) fermée dans la direction axiale présente une épaisseur de tête H_{K1} en fonction de la longueur totale L du rivet de poinçonnage semi-tubulaire (1), selon H_{K1} = 0,1 · L - 0,1 mm.

8. Rivet de poinçonnage semi-tubulaire (1) selon l'une au moins des revendications précédentes, lequel présente une longueur totale L dans la plage de 10,5 mm ≤ L ≤ 16 mm.

9. Joint constitué d'au moins deux composants métalliques (B) superposés en forme de pile, lesquels sont reliés entre eux au moyen du rivet de poinçonnage semi-tubulaire (1) selon l'une au moins des revendications précédentes.

10. Procédé de fabrication d'un rivet de poinçonnage semi-tubulaire (1), présentant les étapes suivantes :
a. mise à disposition d'une section de fil (S1) et
b. frappe à froid (S2) d'un rivet de poinçonnage semi-tubulaire (1) présentant les caractéristiques de l'une au moins des revendications précédentes 1 à 9.

11. Procédé de fabrication selon la revendication 10, présentant l'étape supplémentaire suivante :
c. application d'une couche anticorrosion sur le rivet de poinçonnage semi-tubulaire (1) frappé à froid (S3).

12. Procédé de fabrication selon la revendication 10 ou 11, présentant l'étape supplémentaire suivante :
d. application d'un revêtement liquide destiné à réduire un coefficient de friction d'une surface du rivet de poinçonnage semi-tubulaire (1) (S4).
